# EUROPEAN PATENT SPECIFICATION

(11) **EP 1 151 820 B1**
(45) Date of publication and mention of the grant of the patent: **03.09.2008**
(21) Application number: 01303893.0
(22) Date of filing: 27.04.2001
(51) Int. Cl.: B23K 20/12

(54) **Improved friction stir weldin method using a cryogen flow**
Verbessertes Reibrührschweissverfahren mit Verwendung einer Kryogenflüssigkeit
Procédé de soudage par friction agitation utilisant un flux de matière cryogènique

(30) Priority: 03.05.2000 GB 0010793
(43) Date of publication of application: 07.11.2001
(73) Proprietor: The BOC Group plc, Windlesham Surrey GU20 6HJ (GB)
(72) Inventor: Gabzdyl, Jacek Tadeusz, Frimley, Surrey, GU16 5TR (GB)
(74) Representative: Wickham, Michael

(56) References cited:
- EP-A- 0 810 056
- WO-A-95/23669
- US-B1- 6 168 067
- PATENT ABSTRACTS OF JAPAN vol. 1999, no. 04, 30 April 1999 (1999-04-30) -& JP 11 010367 A (SHOWA ALUM CORP), 19 January 1999 (1999-01-19)
- PATENT ABSTRACTS OF JAPAN vol. 2000, no. 01, 31 January 2000 (2000-01-31) -& JP 11 291067 A (HITACHI LTD), 26 October 1999 (1999-10-26)
- PATENT ABSTRACTS OF JAPAN vol. 017, no. 096 (M-1372), 25 February 1993 (1993-02-25) -& JP 04 288991 A (TOMOEGUMI IRON WORKS LTD), 14 October 1992 (1992-10-14)
- DATABASE WPI Section Ch, Derwent Publications Ltd., London, GB; Class M23, AN 1970-69301R XP002238336 -& SU 261 604 A (EO PATON ELECTROWELDING I)

## Description

The present invention relates to thermal welding processes and in particular to method of fraction stir welding together at least two metallic workpieces according to the preamble of claim 1 (see, for example, JP 111291067 A).

During the thermal welding of metallic work pieces a high heat input is required to generate an acceptable weld. However, this high heat input has the disadvantage that it can cause significant levels of distortion of the work pieces being welded.

It is known to use gases to provide forced cooling during arc welding processes. However, the results of using cooling gases are limited as the cooling ability of the gas streams is relatively low.

Cryogens, particularly liquid nitrogen, and solid carbon dioxide have been used to provide enhanced cooling to arc welding (i.e. fusion) processes in order to enable high quality welds to be produced rapidly without thermal distortion of the workpieces, workpieces of relatively soft metals and alloys such as aluminium and aluminium alloys being particularly prone to distortion and reduction tensile strength. Fusion welding processes employing such cooling are, for example, described in GB-A-1 552 660; GB-A-0 764 336; WO-A-95/236 69; CN-A-1 110 206; JP-A-04-0 288 991; JP-A-02-0 052 173; JP-A-60-0 033 881; JP-A-60-0 018 292; JP-A-52-0 076 243 and SU-A- 414 066.

A drawback of such use of the cryogenic coolant is that it tends to interfere with the welding arc and therefore to disrupt the welding process. Hence the prior documents cited above do not solve the problem of the reliable and rapid formation of stress and strain free welds when joining two workpieces.

Friction stir welding is an alternative welding process to electric arc welding. Examples of friction stir welding are disclosed in WO-A-95 26254, US-A-5 460 317 and US-A- 5 813 592. Difficulties still arise however in reliably and rapidly forming stress and strain free welds when joining two workpieces by friction stir welding.

In a friction stir welding process a tool is used which comprises a shank, a body (sometimes with cooling fins), a shoulder and a pin. There are a wide variety of different tool designs. The tool is usually made from tool steel and may have a specialised coating. The tool is inserted into what is, in essence, a milling machine. The pin is lowered onto the two plates to be joined. The rotation of the pin heats the metal until it softens. At this point the pin is pushed downwards so that the shoulder comes into contact with the metal plates. The shoulder has a concave profile so that the tool locates the plasticised metal displaced by the pin. The shoulder now begins to heat a larger volume of the metal. Eventually enough metal is soft enough to allow the pin to be traversed through the metal plates. The pin stirs the plastic metal surrounding it and therefore joins the two plates together. The process then continues with the pin and the shoulder heating the metal so that it is plasticised and the pin stirring the metal plates together.

JP-A-11-010367 discloses cryogenic cooling of a friction stir welding tool to form a weld having a smooth outward appearance. EP-A-810 056 discloses cooling of a friction stir welding tool to reduce the tendency of softened metal to adhere to the rotary pin and shoulder of the tool. JP-A-11-291067 discloses forming a structure defining a water jacket about two parts to be joined by friction stir welding. Water is passed through the jacket to prevent heat deformation of the parts during the friction stir welding operation.

According to the present invention a method of friction stir welding together at least two metallic workpieces according to claim 1 is provided.

The cryogen may be in the form of a liquid cryogen, for example, liquid nitrogen or liquid argon. Alternatively, and preferably, the cryogen may be solid carbon dioxide.

Preferably the cryogen is applied to the welding zone through a plurality of nozzles.

In friction stir welding the necessary heat is generated internally by operation of a stirring pin. There is no fusion of the metal rather, at least one of the workpieces is plasticised.

Embodiments of the invention will now be described, by way of example, with reference to the accompanying drawing in which:
Figure 1 is a sketch of two metallic plates being butt welded together according to the present invention;
Figure 2 is a schematic perspective drawing of butt welding apparatus for use in the method according to the invention; and
Figure 3 is a graph showing the effect of the method according to the invention in reducing longitudinal residual tensile stresses in weld made by a frictional stir welding method.

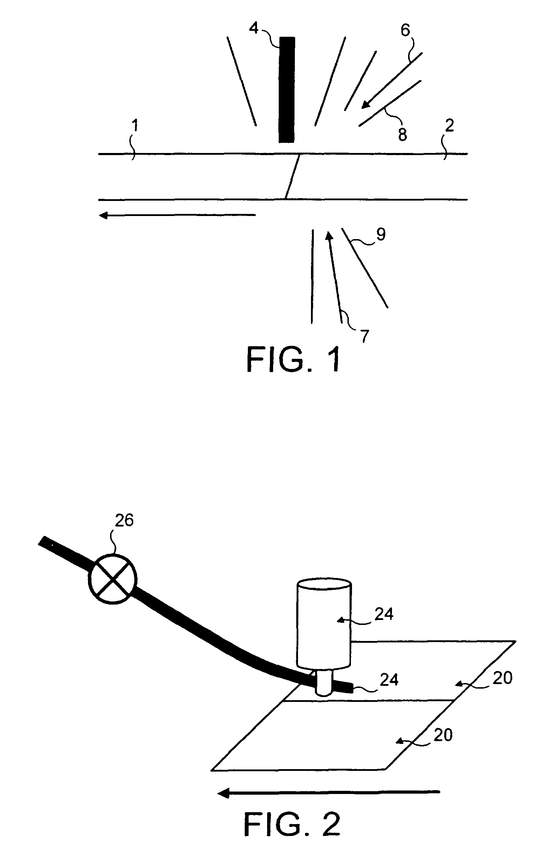

Referring first to Figure 1, two metallic plates 1, 2 to be butt welded together are placed as shown side by side and a stir welding pin 4 is positioned at the abutting surfaces of the two plates. The welding pin 4 is energised in a manner known per se and as a result of its rotation generates heat in a welding zone along the abutment of the two metal plates. Any of the friction stir welding methods and apparatus disclosed in WO-A- 95/26254, US-A-5 460 317 and US-A- 5 813 592 may be used for this purpose. At the same time a cryogen is applied to the welding zone in the form of two jets 6, 7 which pass respectively through nozzles 8, 9.

The cryogen may be a liquid cryogen for example liquid nitrogen or liquid argon. Alternatively the cryogen could be solid carbon dioxide or a mixture of solid carbon dioxide together with a liquid cryogen.

It has been found that by using a cryogen to cool the metallic components being welded the following effects have been observed:
a) the reduction or control the level of distortion;
b) the reduction of tensile stress;
c) the protection of heat sensitive components near the welding zone;
d) the reduction of the effects of chemical degradation as a result of heat;
e) the control of metallurgical properties (ie control of grain growth);
f) more rapid cooling, thereby permitting handling of the workpiece sooner after welding than is conventional methods. This advantage makes possible increases in the overall productivity of a welding shop; and
g) no problem arises in the coolant interfering with the welding process, unlike in arc welding processes.

The choice of the cryogen is dependent on the process and the material of the metallic plates being welded. According to the present invention, the amount of cooling and location to which the cryogen is applied is strictly controlled in order to achieve the desired effect. This is achieved by applying the cryogen via a nozzle or nozzles directed on to the surface of the work pieces being welded. The size and geometry of the nozzles is a critical factor for controlling the cooling footprint as well as the location and orientation of the cooling jets.

### Example

Referring to Figure 2 of the drawings, a butt joint of two aluminium alloy plates 20, each 6.35 mm thick, was made by friction stir welding employing a friction stir welding tool 22. A jet of solid carbon dioxide particles was applied on the top side of the weld from a nozzle 24. The point of application of the carbon dioxide was arranged to trail the welding point by approximately 20 mm. The vertical stand off distance between the tip of the nozzle 24 and the weld was 20mm. The nozzle 24 had a diameter of 1 mm. The jet of solid carbon dioxide particles was formed conventionally (for example by causing a pressurised liquid stream of carbon dioxide to flow from a source (not shown) thereof via solenoid valve 26 through the nozzle 24). The carbon dioxide was supplied at a rate of 1.5 kg/min and at a supply pressure of 22 bar. The friction stir welding tool 22 was rotated at a speed of 355 revolutions per minute and was translated at 95.2 mm per minute.

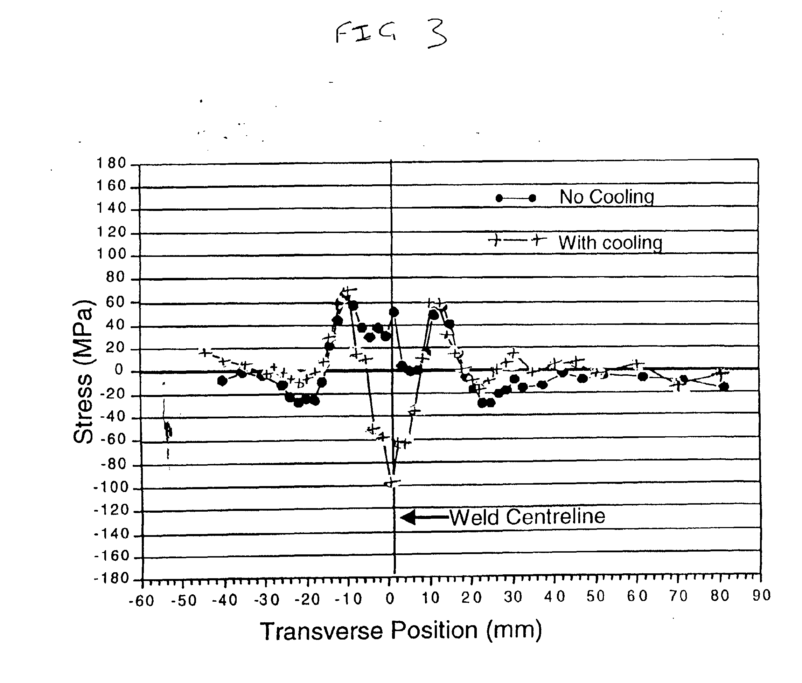

Residual stress measurements by neutron scattering methods made longitudinally through the finished weld clearly show the advantageous effect of cryogenic cooling on stresses in the central weld zone. Figure 3 shows the difference between weld samples made with and without cryogenic cooling in accordance with the invention. Figure 3 shows a substantial reduction in the tensile stresses in the weld zone. In addition and according to the present invention, the cooling actually created compressive stresses in this area. Creation of such compressive stresses is recognised in the art as a highly desirable feature.

## Claims

1. A method of friction stir welding together at least two metallic workpieces (1,2, 20), including the step of applying cooling at or adjacent a heated welding, **characterised in that** the cooling is applied from a nozzle (8) or nozzles (8,9) in the form of at least one jet (6,7) of cryogen to a surface of the workpieces (1,2; 20) being welded and the amount of cooling and the location to which the cryogen is applied is strictly controled to reduce tensile stresses art create compressure stresses in the weld zone.

2. A method as claimed in Claim 1, in which the cryogen is a liquid cryogen.

3. A method as claimed in Claim 2, in which the liquid cryogen is nitrogen.

4. A method as claimed in Claim 2, in which the liquid cryogen is argon.

5. A method as claimed in Claim 1, in which the cryogen is solid carbon dioxide.

6. A method as claimed in Claim 1, in which the cryogen is a mixture of solid carbon dioxide and a liquid cryogen.

7. A method as claimed in any one of the preceding claims wherein the workpieces (1,2 ; 20) are of aluminium or an aluminium alloy.

## Patentansprüche

1. Verfahren zum Reibverschweißen mindestens zweier metallener Werkstücke (1, 2, 20), mit dem Schritt des Aufbringens einer Kühlung an oder neben einer erhitzen Schweißung, **dadurch gekennzeichnet, dass** die Kühlung aus einer Düse oder Düsen (8, 9) in Form mindestens eines Strahls (6, 7) eines Kryogens auf eine Oberfläche der verschweißten Werkstücke (1, 2, 20) aufgebracht wird, und die Menge der Kühlung und der Ort, auf welchen der Kryogen aufgebracht wird, genau gesteuert wird, um Zugspannungen zu reduzieren und Druckspannungen in der Schweißung zu erzeugen.

2. Verfahren nach Anspruch 1, wobei der Kryogen ein flüssiger Kryogen ist.

3. Verfahren nach Anspruch 2, wobei der flüssige Kryogen Stickstoff ist.

4. Verfahren nach Anspruch 2, wobei der flüssige Kryogen Argon ist.

5. Verfahren nach Anspruch 1, wobei der Kryogen festes Kohlendioxid ist.

6. Verfahren nach Anspruch 1, wobei der Kryogen ein Gemisch aus festem Kohlendioxid und einem flüssigen Kryogen ist.

7. Verfahren nach einem der vorhergehenden Ansprüche, wobei die Werkstücke (1, 2, 20) aus Aluminium oder einer Aluminiumlegierung bestehen.

## Revendications

1. Procédé de soudage par friction-malaxage (ou soudage thyxotropique) d'au moins deux pièces métalliques (1, 2 ; 20) à souder ensemble, comprenant l'étape d'application d'un refroidissement sur, ou de manière adjacente à, un soudage chauffé, ***caractérisé en ce que*** le refroidissement est appliqué, à partir d'une buse ou de buses (8,9), sous la forme d'au moins un jet (6, 7) de cryogène sur une surface des pièces (1, 2 ; 20) en train d'être soudées, et le degré de refroidissement et l'emplacement auxquels le cryogène est appliqué sont strictement contrôlés de manière à réduire les contraintes de traction et à créer des contraintes de compression dans la zone de la soudure.

2. Procédé selon la revendication 1, dans lequel le cryogène est un cryogène liquide.

3. Procédé selon la revendication 2, dans lequel le cryogène liquide est l'azote.

4. Procédé selon la revendication 2, dans lequel le cryogène liquide est l'argon.

5. Procédé selon la revendication 1, dans lequel le cryogène est de la neige carbonique.

6. Procédé selon la revendication 1, dans lequel le cryogène est un mélange de neige carbonique et d'un cryogène liquide.

7. Procédé selon l'une quelconque des revendications précédentes, dans lequel les pièces à souder (1, 2 ; 20) sont en aluminium ou en alliage d'aluminium.
